# EUROPEAN PATENT APPLICATION

(11) **EP 4 354 427 A1**
(43) Date of publication of application: **17.04.2024**
(21) Application number: 22897216.2
(22) Date of filing: 03.08.2022
(51) Int. Cl.: G10L 15/22, G06F 3/16, G06F 9/445

(54) **VOICE CONTROL METHOD, TERMINAL DEVICE, SERVER, AND STORAGE MEDIUM**

(30) Priority: 29.11.2021 CN 202111438501
(71) Applicant: ZTE Corporation, Shenzhen, Guangdong 518057 (CN)
(72) Inventor: ZHANG, Lizhu, Shenzhen, Guangdong 518057 (CN)
(74) Representative: Zoli, Filippo
(86) International application number: PCT/CN2022/110032
(87) International publication number: WO 2023/093121

(57) **Abstract**

Embodiments of the present application relate to the technical field of terminal control, and provide a voice control method, a device, and a storage medium. The method comprises: acquiring function information of an application program on a terminal device, the function information comprising an invocation mode and an application description typical statement corresponding to a preset function of the application program, and the application description typical statement being a sentence describing the preset function (S101); and when an acquired voice control instruction matches the application description typical statement, invoking the application program according to the invocation mode to implement the preset function (S102).

## Description

### CROSS-REFERENCE TO RELATED APPLICATION

This application is filed on the basis of Chinese patent application No. 202111438501.4 filed November 29, 2021, and claims priority to the Chinese patent application, the entire contents of which are incorporated herein by reference.

### TECHNICAL FIELD

The present disclosure relates to the field of terminal control technologies, and more particularly, to a voice control method, a terminal device, a server, and a storage medium.

### BACKGROUND

With the continuous development of science and technology, electronic technologies and speech recognition technologies have also achieved rapid development. At present, terminal devices are equipped with a voice assistant. The voice assistant can receive a speech of a user and generate a corresponding control instruction to control the terminal device, thereby realizing a voice control function on the terminal device. However, when determining to-be-executed functions through voice, there is no way to quickly learn which functions in applications on the terminal device can be executed by the voice assistant, and therefore there is no way for the voice assistant to quickly execute the functions of these applications.

### SUMMARY

Embodiments of the present disclosure provide a voice control method, a terminal device, and a storage medium.

In accordance with a first aspect of the present disclosure, an embodiment provides a voice control method, including: acquiring function information of an application, where the function information includes a calling mode and an application description typical statement corresponding to a preset function of the application, and the application description typical statement is a sentence describing the preset function; and calling the application according to the calling mode to implement the preset function, in response to an acquired voice control instruction matching the application description typical statement.

In accordance with a second aspect of the present disclosure, an embodiment provides a terminal device, including a processor, a memory, a computer program stored in the memory and executable by the processor, and a communication bus configured for implementing connection and communication between the processor and the memory, where the computer program, when executed by the processor, causes the processor to implement the voice control method applied to the terminal device according to any one of the embodiments in the description of the present disclosure.

In accordance with a third aspect of the present disclosure, an embodiment provides a server, including a processor, a memory, a computer program stored in the memory and executable by the processor, and a communication bus configured for implementing connection and communication between the processor and the memory, where the computer program, when executed by the processor, causes the processor to implement the voice control method applied to the server according to any one of the embodiments in the description of the present disclosure.

In accordance with a fourth aspect of the present disclosure, an embodiment provides a storage medium for computer-readable storage, the storage medium storing one or more programs which, when executed by one or more processors, cause the one or more processors to implement the voice control method applied to the terminal device or the voice control method applied to the server according to any one of the embodiments in the description of the present disclosure.

### BRIEF DESCRIPTION OF DRAWINGS

To describe the technical schemes of the embodiments of the present disclosure more clearly, the following briefly introduces the accompanying drawings required for describing the embodiments. Apparently, the accompanying drawings in the following description show only some embodiments of the present disclosure, and those having ordinary skills in the art may still derive other drawings from these accompanying drawings without creative efforts.
FIG. 1 is a schematic flowchart of a voice control method according to an embodiment of the present disclosure;
FIG. 2a is a schematic diagram of a scenario of a configuration file encapsulated by a voice assistant module according to an embodiment of the present disclosure;
FIG. 2b is a schematic diagram of a scenario of a configuration file encapsulated by a voice assistant module according to another embodiment of the present disclosure;
FIG. 3 is a schematic flowchart of a voice control method according to another embodiment of the present disclosure;
FIG. 4 is a schematic structural block diagram of a terminal device according to an embodiment of the present disclosure; and
FIG. 5 is a schematic structural block diagram of a server according to an embodiment of the present disclosure.

### DETAILED DESCRIPTION

The technical schemes in the embodiments of the present disclosure are clearly and completely described below with reference to the accompanying drawings in the embodiments of the present disclosure. Apparently, the described embodiments are merely some rather than all the embodiments of the present disclosure. All other embodiments obtained by those having ordinary skills in the art based on the embodiments of the present disclosure without creative efforts shall fall within the protection scope of the present disclosure.

The flowcharts shown in the drawings are illustrative only, and neither indicate that all the contents and operations/steps must be included, nor indicate that the operations/steps must be executed in the order described. For example, some operations/steps may further be decomposed, combined or partially combined, so the actual order of execution may change according to actual situations.

It should be understood that terms used in the description of the present disclosure are merely used for describing the objectives of specific embodiments, and are not intended to limit the present disclosure. As used in the description of the present disclosure and the appended claims, the singular forms "a", "an," and "the" are intended to include the plural forms as well, unless the context clearly indicates otherwise.

Some embodiments of the present disclosure will be described in detail below with reference to the accompanying drawings. The following embodiments and the features in the embodiments may be combined with each other if not in collision.

Embodiments of the present disclosure provide a voice control method, a terminal device, and a storage medium. The voice control method may be applied to a mobile terminal. The mobile terminal may be an electronic device such as a mobile phone, a tablet computer, a notebook computer, a desktop computer, a personal digital assistant, or a wearable device.

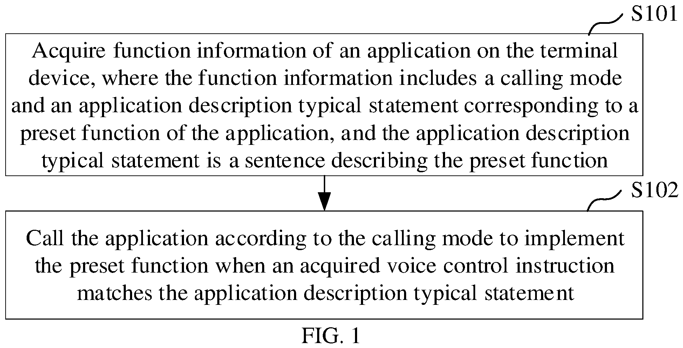

FIG. 1 is a schematic flowchart of a voice control method according to an embodiment of the present disclosure.

As shown in FIG. 1, the voice control method includes the following steps S101 to S104.

At S101, function information of an application on the terminal device is acquired, where the function information includes a calling mode and an application description typical statement corresponding to a preset function of the application, and the application description typical statement is a sentence describing the preset function.

In an example, the application may be an application already installed on the terminal device or an application to be installed. The function information of the application is acquired, such that when a corresponding function needs to be executed, the corresponding application is called according to the function information of the application, and the corresponding function is implemented based on the called application.

In an example, the application may be installed on the terminal device through a configuration file configured in a specific format, and another module such as a voice assistant module may acquire the function information from the configuration file corresponding to the application. It can be understood that, the function information acquired from the configuration file includes the calling mode and the application description typical statement corresponding to the preset function.

In an example, the preset function may be query, search or other functions, or may be play, buy or other functions. It can be understood that different functions are implemented by different applications. It can be understood that the application description typical statement is used for describing the preset function. For example, an application description typical statement "play music" is used for describing a play function, and an application description typical statement "buy skin care products" is used for describing a buy function. It can be understood that, playing music is implemented by a music playback application, and buying skin care products is implemented by an e-commerce platform application.

In an example, the calling mode is used for indicating a mode of running the application. It can be understood that if there are different modules in a system of the terminal device, when a current module receives an instruction of running another module, a calling operation needs to be performed at the current module to run the another module. The module may be, for example, a module corresponding to a respective application or a voice assistant module. The voice assistant module calls an application according to a received voice control instruction. For example, the voice assistant module receives a voice control instruction of "buying" and calls an e-commerce platform application to perform a buy operation.

It can be understood that the function information of the application is read and stored in at least one module, for example, the voice assistant module, such that the application can be called by a voice control instruction to run the preset function.

In an example, the function information of the application is encapsulated in the format of a key-value pair. A key in the key-value pair may be the preset function, and a value in the key-value pair may be one or more application description typical statements corresponding to the preset function.

In an example, encapsulating the function information of the application in at least one module can effectively improve the efficiency of calling the application to implement the preset function, and allows for the calling of the application in a specific way, for example, through voice control.

In some embodiments, acquiring the function information of the application includes: acquiring meta-data data from a configuration file of the application through a meta-data interface; and parsing the meta-data data to obtain the function information of the application.

In an example, the meta-data interface is an interface configured for acquiring and parsing the meta-data data in a module. Through the meta-data interface, meta-data data in a configuration file of another application can be acquired to determine function information of the another application.

In an example, the configuration file includes components. The components include an Activity, a Service, a Broadcast receiver, and a Content provider that make up the application. Each component has a different name, for example, "activity, Buy Activity". The application may implement different functions through components with different names. Some of these components can further notify other modules of information about the components and about conditions under which the components can be started. It can be understood that, the voice assistant module can acquire the calling mode and the application description typical statement from the information, so as to call the components of the application.

In an example, the meta-data may be data that supports the application in running and implementing corresponding functions in the component, for example, meta-data of "Action" under the "activity, Buy Activity" component. By parsing the meta-data of the "Action", "buy" can be obtained. It can be understood that a buy function can be implemented by calling the application.

In an example, the meta-data may be stored in the format of a key-value pair. After the meta-data of the configuration file of the application is acquired, the key-value pair corresponding to the meta-data is parsed, for example, to acquire a key and a value in the key-value pair corresponding to the meta-data. It can be understood that, the key is used for indicating the preset function of the application, and the value is used for indicating the application description typical statement. A keyword is extracted from the key-value pair corresponding to the meta-data to determine the function information, so as to complete the parsing of the meta-data.

In an example, meta-data of an application may include meta-data of different functions, and application description typical statements corresponding to different preset functions of the application are determined according to the meta-data of the different functions.

In some embodiments, the function information of the application may be acquired through a preset function information acquisition interface. It can be understood that the function information acquisition interface is configured for acquiring the corresponding application description typical statement, calling mode and the like from the meta-data of the application.

In an example, in an Android platform, the preset function information acquisition interface may be a meta-data interface. Based on the meta-data interface, the function information of the application can be acquired through a package manager.

In some embodiments, acquiring the function information of the application includes: uploading the application description typical statement of the application to a server, such that the server extends the application description typical statement to match more user statements.

In an example, after the application description typical statement in the function information is acquired, the application description typical statement is uploaded to the server, such that the server can extend the application description typical statement to obtain an extended application description typical statement. It can be understood that, extending the application description typical statement may be acquiring synonyms based on semantics of the application description typical statement. For example, "buy" may be extended to obtain "get", "purchase", etc. In some other implementations, extending the application description typical statement may be acquiring synonyms in different languages or dialects based on the semantics of the application description typical statement. For example, "purchase" may be extended to obtain "buy", "acquire", etc. The above extension of the application description typical statement is merely an example, and is not intended to limit the specific content and steps of the extension of the application description typical statement.

Calling the application according to the calling mode to implement the preset function when an acquired voice control instruction matches the application description typical statement includes:
acquiring a calling mode corresponding to the extended application description typical statement when the acquired voice control instruction matches the extended application description typical statement, and calling the application according to the calling mode to implement the preset function.

In an example, when the voice control instruction matches the extended application description typical statement, the server delivers the calling mode corresponding to the extended application description typical statement to a client, such that the client calls the application according to the calling mode to implement the preset function described by the application description typical statement.

In an example, a generalization ability of the voice assistant module can be improved by extending the application description typical statement by the server, thereby improving the universality of voice control.

At S102, the application is called according to the calling mode to implement the preset function when an acquired voice control instruction matches the application description typical statement.

In an example, when it is determined that the voice control instruction matches the application description typical statement, the application is called according to the calling mode corresponding to the matching application description typical statement to implement the preset function.

In some embodiments, the method further includes: acquiring the voice control instruction; determining text information corresponding to the acquired voice control instruction; and determining that the acquired voice control instruction matches the application description typical statement if the text information includes a keyword corresponding to the application description typical statement.

In an example, speech recognition may be performed on the voice control instruction to obtain text information corresponding to the voice control instruction, and the text information is compared with the application description typical statement, to determine whether the voice control instruction matches the application description typical statement. It can be understood that, if the text information corresponding to the voice control instruction includes the keyword corresponding to the application description typical statement, it is determined that the acquired voice control instruction matches the application description typical statement.

If the text information corresponding to the voice control instruction does not include the keyword corresponding to the application description typical statement, it is determined that the acquired voice control instruction does not match the application description typical statement, and prompt information is output.

In an example, speech recognition may be performed in the terminal device, and the text information corresponding to the voice control instruction may be matched against the application description typical statement.

In an example, the keyword corresponding to the application description typical statement is the same as an intention of the application description typical statement. For example, if the application description typical statement is "I will not buy a toothbrush", the corresponding keyword includes "not buy", indicating a user's intention of not buying a toothbrush. It can be understood that, if the keyword is "buy", the keyword is different from the user's intention. The above description is given by way of example only, and is not intended to limit the application description typical statement and the keyword corresponding to the application description typical statement.

When the text information obtained by speech recognition in the terminal device matches the application description typical statement, the application is called according to the calling mode corresponding to the application description typical statement, to implement the preset function corresponding to the application description typical statement.

In some other implementations, when the text information obtained by speech recognition in the terminal device cannot be matched against the application description typical statement, the terminal device may upload the text information to the server, such that the server extracts a keyword from the text information, and matches the extracted keyword against the application description typical statement. It can be understood that, after extracting the keyword from the text information, the server may perform extension processing based on the keyword, determine several descriptors having the same semantics as the keyword, and match the several descriptors against the application description typical statement.

In an example, alternatively, the terminal device may send the voice control instruction to the server, such that the server performs speech recognition to obtain text information; and the terminal device acquires the text information sent by the server, and matches the text information against the application description typical statement.

In an example, after the terminal device uploads the application description typical statement to the server and the server acquires the voice control instruction, the server may perform speech recognition on the voice control instruction to obtain corresponding text information, and match the text information against the extended application description typical statement, to determine whether the voice control instruction matches the application description typical statement.

In an example, when the server determines that the voice control instruction matches the application description typical statement, the server sends the calling mode of the application to the terminal device, such that the terminal device calls the application according to the calling mode sent by the server to the preset function.

In an example, after the voice control instruction is recognized and is determined to match the application description typical statement, the application is called according to the calling mode in the function information corresponding to the application description typical statement, to implement the preset function described by the application description typical statement. For example, in the voice assistant module, an application description typical statement "search" corresponds to a search application, and the search application is called to implement a "search" function.

It can be understood that there may be a plurality of search applications in the terminal device, and when an application to be called cannot be determined according to the application description typical statement, a message box is popped up on a display apparatus of the terminal device for the user to select the application to be called.

When only one application corresponding to the application description typical statement is installed in the terminal device, the corresponding application is called to implement the preset function corresponding to the application description typical statement.

In an example, by matching the application description typical statement against the voice control instruction, calling the application according to the calling mode included in the function information corresponding to the application description typical statement, and implementing the preset function corresponding to the application description typical statement, the efficiency of running the application to implement the preset function can be effectively improved.

In some embodiments, the function information further includes a slot value description for indicating slot value transfer; that the voice control instruction matches the application description typical statement includes: the voice control instruction includes a keyword corresponding to the application description typical statement and includes a slot value corresponding to the slot value description; and calling the application according to the calling mode to implement the preset function includes: transferring the slot value in the voice control instruction to the application according to the slot value description, such that the application implements the preset function according to the slot value in the voice control instruction.

In an example, the voice control instruction includes a keyword corresponding to the application description typical statement and includes a slot value corresponding to the slot value description. For example, the voice control instruction includes "buy cold medicine", where "buy" is the keyword corresponding to the application description typical statement, and "cold medicine" is the slot value. When the voice control instruction includes the keyword and the slot value, the slot value in the voice control instruction is transferred to the application according to the slot value description, such that the application implements the preset function according to the slot value, for example a function of buying a cold medicine in an e-commerce platform application.

In an example, the slot value description and the application description typical statement may be stored in the format of a key-value pair.

In an example, the slot value description may include a slot value attribute. The slot value attribute lists several statements of the slot value. For example, when the slot value is medicine, the slot value attribute may be medicine name, cold medicine, antipyretics, etc. The above description is merely an example of the slot value attribute, and is not intended to limit the slot value attribute.

In an example, the slot value description may further include a slot value transfer mode, for example, an extra transfer mode. In the extra transfer mode, a key is used for indicating the slot value, where the key may be acquired from the configuration file of the application. A method of acquiring the key is the same as the above method of acquiring the application description typical statement, and the details will not be repeated herein. In some other implementations, the key may be separately configured. A value may be used for indicating the extracted slot value content. The slot value in the voice control instruction is transferred to the application. It can be understood that if the slot value description is not included, it may be impossible to transfer the slot value from the voice control instruction to the application, and consequently the application cannot implement the corresponding function.

In an example, different parameters can be transferred by the slot value description, to improve the applicability of controlling the application by voice.

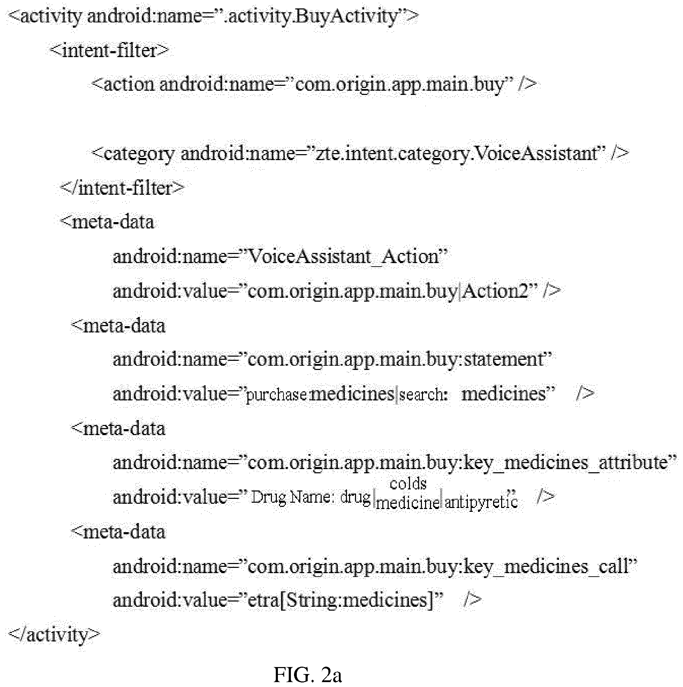

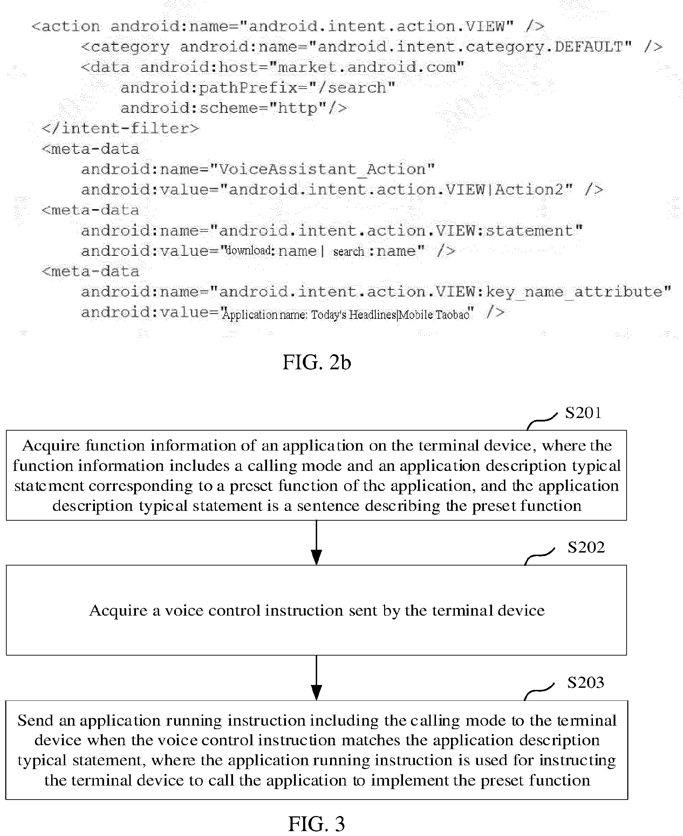

In an example, as shown in FIG. 2a and FIG. 2b, FIG. 2a is a schematic diagram of a scenario of a configuration file encapsulated by a voice assistant module according to an embodiment of the present disclosure, and FIG. 2b is a schematic diagram of a scenario of a configuration file encapsulated by a voice assistant module according to another embodiment of the present disclosure.

In an example, when the voice assistant module acquires the function information of the application, the function information of the application configured in a certain format is acquired. The format may be a key-value pair. When the voice assistant module acquires the application description typical statement, the slot value description corresponding to the application description typical statement and the calling mode corresponding to the application can be acquired, thereby improving the convenience for the voice assistant module to acquire the function information of the application and call the application.

As shown in FIG. 2a and FIG. 2b, action and category are parts in AndroidManifest that are called by Activity. As shown in FIG. 2a, the first meta_data is defined to indicate which action needs to be called by the voice assistant. If there are a plurality of actions, the actions may be separated by vertical bars. The second meta_data is the application description typical statement. To facilitate the extraction of the corresponding value, a specification of action:statement is used as the key, a plurality of statements are separated by vertical bars in the corresponding value, and the English word after colon is the slot value. This Activity can realize the function of buying medicines. In addition, there is a slot value description in FIG. 2a. The third meta_data defines the slot value attribute in the slot value description, where a specification "action: key_slot value keyword_attribute" is defined to facilitate reading of the key, and the slot value attribute in the figure lists several descriptions of the slot value. The fourth meta_data defines a calling mode of the slot value, where a specification "action: key_slot value_call" is defined to facilitate reading of the key, and the corresponding value indicates transfer through Extra. The type of Extra is String, and the key is medicines. By default, transfer is performed through Extra, and the key is the slot value keyword. If a parameter is transferred through data, representations of a key and a slot value of the parameter may be required to be the same.

It can be understood that, because the function information in the application is configured in a certain format, for example, a parameter in FIG. 2a is name, the voice assistant module may acquire the application description typical statement according to a value corresponding to "name="com.origin.app.main.buy:statement", and acquire the slot value description according to a value corresponding to name="com.origin.app.main.buy:key_medicines_attribute", so as to improve the convenience for the voice assistant module to acquire the function information of the application. It can be understood that, if the function information in the application is not configured according to a certain format, and/or the voice assistant module does not determine that the acquired parameter is name, the rate of acquiring the corresponding function information of the application will be slow, and miscorrespondence or omission is likely to occur. The configured function information of the application is merely an example and is not intended to limit to the specific function information of the application and the manner in which the function information of the application is acquired.

FIG. 2b shows another implementation, and the specific implementation steps are similar to those of FIG. 2a, so the details will not be repeated herein. The application description typical statement, the slot value description, and the calling mode in FIG. 2a are merely examples and are not intended to limit specific implementations of the present disclosure.

According to the voice control method applied to a terminal device in this embodiment, function information configured according to a certain format in an application is acquired, where the function information includes a calling mode corresponding to a preset function of the application and an application description typical statement; and when an acquired voice control instruction matches the application description typical statement, the application is called according to the calling mode to implement the preset function. In this way, the calling of the preset function of the application is facilitated.

FIG. 3 is a schematic flowchart of a voice control method according to another embodiment of the present disclosure. Referring to FIG. 3, the voice control method is applied to a server in communication connection with a terminal device. The method includes the following steps S201 to S203.

At S201, function information of an application on the terminal device is acquired, where the function information includes a calling mode and an application description typical statement corresponding to a preset function of the application, and the application description typical statement is used for describing the preset function.

In an example, when the terminal device is in communication connection with the server, and function information of an application installed on the terminal device is sent to the server, the server can acquire the function information of the application installed on the terminal device.

In an example, the function information of the application may be as described in S101, and the details will not be repeated herein.

At S202, a voice control instruction sent by the terminal device is acquired.

In an example, acquiring a voice control instruction sent by the terminal device may include: the terminal device acquires the voice control instruction through a recording apparatus or through a recording device in communication with the terminal device, such that the server can acquire the voice control instruction sent by the terminal device.

At S203, an application running instruction including the calling mode is sent to the terminal device when the voice control instruction matches the application description typical statement, where the application running instruction is used for instructing the terminal device to call the application to implement the preset function.

In an example, the voice control instruction is matched against the application description typical statement, and when the voice control instruction matches the application description typical statement, the application running instruction is generated and sent to the terminal device. The application running instruction includes the calling mode of the application, so that the terminal device can call the application according to the acquired application running instruction.

In an example, the application running instruction may further include the matching application description typical statement to instruct the terminal device to call the application to implement the preset function described by the matching application description typical statement. In some other implementations, the application run instruction may further include the matching application description typical statement and a slot value.

In an example, because the server sends an application running instruction to the terminal device, the matching of the application description typical statement does not need to be performed in the terminal device, thereby improving the generalization of the matching of the application description typical statement.

In some embodiments, determining that the voice control instruction matches the application description typical statement includes: determining text information corresponding to the voice control instruction; and determining that the voice control instruction matches the application description typical statement when the text information includes a keyword corresponding to the application description typical statement.

In an example, speech recognition may be performed on the voice control instruction to obtain text information corresponding to the voice control instruction, and the text information is compared with the application description typical statement, to determine whether the voice control instruction matches the application description typical statement. It can be understood that, if the text information corresponding to the voice control instruction includes the keyword corresponding to the application description typical statement, it is determined that the acquired voice control instruction matches the application description typical statement.

In some embodiments, the method further includes: extending the application description typical statement in the function information acquired from the terminal device, where the extending includes synonym extending.

In an example, the application description typical statement in the acquired function information may be extended to increase description statements of the corresponding function of the application, thereby improving the applicability of controlling the application by voice.

In an example, the extension may be determining semantics of the application description typical statement in the function information and acquiring synonyms based on the semantics of the application description typical statement.

In an example, when the voice control instruction matches the extended application description typical statement, the application running instruction is sent to the terminal device. It can be understood that if text information corresponding to the voice control instruction includes the extended application description typical statement, it is determined that the voice control instruction matches the extended application description typical statement.

In some implementations, extending the application description typical statement includes: determining the semantics of the application description typical statement; and extending the application description typical statement according to the semantics of the application description typical statement.

In an example, extending the application description typical statement may be, for example, performing semantic analysis of the application description typical statement to determine the semantics corresponding to the application description typical statement, and extending the application description typical statement according to the semantics of the application description typical statement may be acquiring similar statements in the same language or in different languages. Reference may be made to S101 for details, which will not be repeated herein.

In some embodiments, the function information further includes a slot value description for indicating slot value transfer; that the voice control instruction matches the application description typical statement includes: the voice control instruction includes a keyword corresponding to the application description typical statement and includes a slot value corresponding to the slot value description; and sending an application running instruction including the calling mode to the terminal device includes: sending the application running instruction including the calling mode and the slot value to the terminal device, such that the application runs the preset function according to the slot value in the voice control instruction.

In an example, when the voice control instruction matches the application description typical statement, it is determined whether the voice control instruction includes the slot value. If the voice control instruction does not include the slot value, an application running instruction is generated according to the application description typical statement to instruct the terminal device to call the application. If the voice control instruction includes the slot value, it is determined whether the slot value matches the slot value description in the function information. When the slot value matches the slot value description in the function information, the slot value in the voice control instruction is transferred according to the slot value description, and an application running instruction is generated according to the calling mode and the slot value, such that the terminal device calls the application and implements the preset function according to the slot value in the voice control instruction. For other steps, reference may be made to S102, and the details will not be repeated herein.

According to the voice control method applied to a server in this embodiment, function information of an application installed on the terminal device is acquired, where the function information includes a calling mode and an application description typical statement corresponding to a preset function of the application, and the application description typical statement is used for describing the preset function; a voice control instruction sent by the terminal device is acquired; and sending an application running instruction including the calling mode to the terminal device when the voice control instruction matches the application description typical statement, where the application running instruction is used for instructing the terminal device to call the application according to the calling mode to implement the preset function. In this way, the calling of the application and the implementation of the preset function of the application in the terminal device are facilitated.

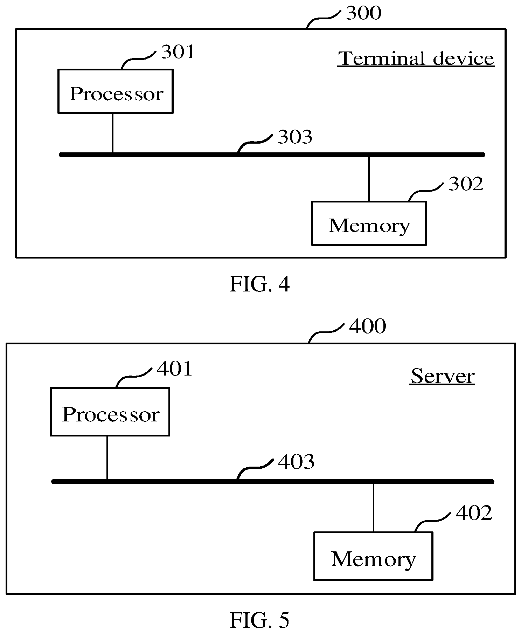

FIG. 4 is a schematic structural block diagram of a terminal device according to an embodiment of the present disclosure.

As shown in FIG. 4, the terminal device 300 includes a processor 301 and a memory 302. The processor 301 and the memory 302 are connected via a bus 303. The bus is, for example, an Inter-integrated Circuit (I2C) bus.

In an example, the processor 301 is configured for providing computing and control capabilities to support operation of the entire terminal device. The processor 301 may be a Central Processing Unit (CPU). The processor 301 may also be other general-purpose processor, a Digital Signal Processor (DSP), an Application Specific Integrated Circuit (ASIC), a Field-Programmable Gate Array (FPGA), or other programmable logic device, discrete gate or transistor logic device, discrete hardware component, or the like. The general-purpose processor may be a microprocessor or any conventional processor or the like.

For example, the memory 302 may be a Flash chip a Read-Only Memory (ROM) disk, an optical disc, a USB flash drive, a removable hard disk, or the like.

Those having ordinary skills in the art may understand that the structure shown in FIG. 4 is merely a block diagram of a partial structure related to the schemes of the embodiments of the present disclosure and does not constitute any limitation on terminal devices to which the schemes of the embodiments of the present disclosure is applied. The terminal device may include more or fewer components than those shown in the figure, or some components may be combined, or a different component arrangement may be used.

The processor is configured for running a computer program stored in the memory, to implement any one of the voice control methods provided in the embodiments of the present disclosure.

In an embodiment, the processor is configured for running the computer program stored in the memory, to implement the following operations:
acquiring function information of an application on the terminal device, where the function information includes a calling mode and an application description typical statement corresponding to a preset function of the application, and the application description typical statement is used for describing the preset function; and
calling the application according to the calling mode to implement the preset function when an acquired voice control instruction matches the application description typical statement.

In an embodiment, the processor is configured for implementing the following operations to implement the voice control method:
acquiring the voice control instruction;
determining text information corresponding to the voice control instruction; and
determining that the acquired voice control instruction matches the application description typical statement when the text information includes a keyword corresponding to the application description typical statement.

In an embodiment, the function information further includes a slot value description for indicating slot value transfer; that the voice control instruction matches the application description typical statement includes: the voice control instruction includes a keyword corresponding to the application description typical statement and includes a slot value corresponding to the slot value description; and when calling the application according to the calling mode to implement the preset function, the processor is configured for implementing the following operation:
transferring the slot value in the voice control instruction to the application according to the slot value description, such that the application implements the preset function according to the slot value in the voice control instruction.

In an embodiment, when acquiring the function information of the application, the processor is configured for implementing the following operations:
acquiring meta-data from a configuration file of the application through a meta-data interface; and
parsing the meta-data to obtain the function information of the application.

In an embodiment, when acquiring the function information of the application, the processor is configured for implementing the following operations:
sending an application identifier of the application to a server; and
acquiring the function information of the application determined by the server according to the application identifier.

In an embodiment, when acquiring the function information of the application, the processor is configured for implementing the following operations:
uploading the application description typical statement of the application to a server, such that the server extends the application description typical statement; and
acquiring the application description typical statement extended by the server.

It should be noted that those having ordinary skills in the art can clearly understand that for convenience and brevity of description, for a specific operational process of the terminal device described above, reference may be made to the corresponding process in the above embodiment of the voice control method applied to a terminal device, and the details will not be repeated herein.

FIG. 5 is a schematic structural block diagram of a server according to an embodiment of the present disclosure.

As shown in FIG. 5, the server 400 includes a processor 401 and a memory 402. The processor 401 and the memory 402 are connected via a bus 403. The bus is, for example, an I2C bus.

For example, the processor 401 is configured for providing computing and control capabilities to support operation of the entire terminal device. The processor 401 may be a CPU. The processor 401 may also be other general-purpose processor, a DSP, an ASIC, an FPGA, or other programmable logic device, discrete gate or transistor logic device, discrete hardware component, or the like. The general-purpose processor may be a microprocessor or any conventional processor or the like.

For example, the memory 402 may be a Flash chip a ROM disk, an optical disc, a USB flash drive, a removable hard disk, or the like.

Those having ordinary skills in the art may understand that the structure shown in FIG. 5 is merely a block diagram of a partial structure related to the schemes of the embodiments of the present disclosure and does not constitute any limitation on terminal devices to which the schemes of the embodiments of the present disclosure is applied. The server may include more or fewer components than those shown in the figure, or some components may be combined, or a different component arrangement may be used.

The processor is configured for running a computer program stored in the memory, to implement any one of the voice control methods provided in the embodiments of the present disclosure.

In an embodiment, the processor is configured for running the computer program stored in the memory, to implement the following operations:
acquiring function information of an application on the terminal device, where the function information includes a calling mode and an application description typical statement corresponding to a preset function of the application, and the application description typical statement is used for describing the preset function;
acquiring a voice control instruction sent by the terminal device; and
sending an application running instruction including the calling mode to the terminal device when the voice control instruction matches the application description typical statement, where the application running instruction is used for instructing the terminal device to call the application to implement the preset function.

In an embodiment, the processor is configured for implementing the following operations to implement the voice control method:
determining text information corresponding to the voice control instruction; and
determining that the voice control instruction matches the application description typical statement when the text information includes a keyword corresponding to the application description typical statement.

In an embodiment, the processor is configured for implementing the following operations to implement the voice control method:
extending the application description typical statement in the function information acquired from the terminal device, where the extending includes synonym extending.

In an embodiment, the function information further includes a slot value description for indicating slot value transfer; that the voice control instruction matches the application description typical statement includes: the voice control instruction includes a keyword corresponding to the application description typical statement and includes a slot value corresponding to the slot value description; and when sending an application running instruction including the calling mode to the terminal device, the processor is configured for implementing the following operation:
sending the application running instruction to the terminal device according to the calling mode and the slot value description, such that the terminal device calls the application and implements the preset function according to the slot value in the voice control instruction.

It should be noted that those having ordinary skills in the art can clearly understand that for convenience and brevity of description, for a specific operational process of the terminal device described above, reference may be made to the corresponding process in the above embodiment of the voice control method applied to a server, and the details will not be repeated herein.

An embodiment of the present disclosure provides a storage medium for computer-readable storage, where the storage medium stores one or more programs which, when executed by one or more processors, cause the one or more processors to implement steps of a voice control method applied to a terminal device or steps of a voice control method applied to a server according to any one of the embodiments in the description of the present disclosure.

The storage medium may be a storage unit inside the terminal device and/or the server described in the foregoing embodiments, for example, a hard disk or an internal memory of the terminal device and/or the server. The storage medium may alternatively be a storage device outside the terminal device and/or the server, for example, a removable hard disk, a Smart Media Card (SMC), a Secure Digital (SD) card, or a flash card equipped on the terminal device and/or the server.

The embodiments of the present disclosure provide a voice control method, a terminal device, a server, and a storage medium. In the embodiments of the present disclosure, the method includes: acquiring function information of an application, where the function information includes a calling mode and an application description typical statement corresponding to a preset function of the application, and the application description typical statement is a sentence describing the preset function; and calling the application according to the calling mode to implement the preset function when an acquired voice control instruction matches the application description typical statement. The present disclosure provides a method for an application to register its function description and calling relationship with another module or program, for example, a voice assistant module, such that the another module or program can obtain function information and a calling mode of the application, thereby improving the efficiency of controlling applications in a terminal device by voice.

Those having ordinary skills in the art can understand that all or some of the steps in the methods disclosed above and the functional modules/units in the system and the apparatus can be implemented as software, firmware, hardware, and appropriate combinations thereof. In a hardware implementation, the division of the functional modules/units mentioned in the above description does not necessarily correspond to the division of physical components. For example, one physical component may have multiple functions, or one function or step may be jointly executed by several physical components. Some or all physical components may be implemented as software executed by a processor, such as a central processing unit, a digital signal processor, or a microprocessor, or as hardware, or as an integrated circuit, such as an application-specific integrated circuit. Such software may be distributed on a computer-readable medium, which may include a computer storage medium (or non-transitory medium) and a communication medium (or transitory medium). As is known to those having ordinary skills in the art, the term "computer storage medium" includes volatile and nonvolatile, removable and non-removable media implemented in any method or technology for storage of information (such as computer-readable instructions, data structures, program modules, or other data). The computer storage medium includes, but not limited to, a random access memory (RAM), a ROM, an electrically erasable programmable read-only memory (EEPROM), a flash memory or other memory technology, a compact disc read-only memory (CD-ROM), a digital versatile disc (DVD) or other optical storage, a cassette, a magnetic tape, a magnetic disk storage or other magnetic storage device, or any other medium which can be used to store the desired information and which can be accessed by a computer. In addition, as is known to those having ordinary skills in the art, the communication medium typically includes computer-readable instructions, data structures, program modules, or other data in a modulated data signal such as a carrier or other transport mechanism, and can include any information delivery medium.

It should be understood that the term "and/or" as used in the description of the present disclosure and the appended claims refers to any combination and all possible combinations of one or more of the associated listed items and includes such combinations. It should be noted that in the present disclosure, the terms "comprise", "include" or any other variants are intended to encompass non-exclusive inclusion, such that a process, a method, an article or a system including a series of elements not only include those elements, but also includes other elements not listed explicitly or includes intrinsic elements for the process, the method, the article, or the system. Without any further limitation, an element defined by the phrase "comprising one" does not exclude existence of other same elements in the process, the method, the article, or the system that includes the elements.

The serial numbers of the embodiments of the present disclosure are only for the purpose of description, and do not indicate a preference for the embodiments. The foregoing descriptions are merely specific embodiments of the present disclosure, and the protection scope of the present disclosure is not limited thereto. Various equivalent variations or replacements can be easily figured out by those having ordinary skills in the art within the technical scope disclosed in the present disclosure, and such variations or replacements shall fall within the protection scope of the present disclosure. Therefore, the protection scope of the present disclosure is defined by the appended claims.

## Claims

1. A voice control method, applied to a terminal device, the method comprising:
acquiring function information of an application on the terminal device, wherein the function information comprises a calling mode and an application description typical statement corresponding to a preset function of the application, and the application description typical statement is a sentence describing the preset function; and
calling the application according to the calling mode to implement the preset function, in response to an acquired voice control instruction matching the application description typical statement.

2. The voice control method of claim 1, wherein an acquired voice control instruction matching the application description typical statement comprises:
acquiring the voice control instruction;
determining text information corresponding to the voice control instruction; and
determining that the acquired voice control instruction matches the application description typical statement, in response to the text information comprising a keyword corresponding to the application description typical statement.

3. The voice control method of claim 1, wherein the application description typical statement further comprises a slot value description for indicating slot value transfer; that the voice control instruction matches the application description typical statement comprises: the voice control instruction comprises a keyword corresponding to the application description typical statement and comprises a slot value corresponding to the slot value description; and
calling the application according to the calling mode to implement the preset function comprises:
transferring the slot value in the voice control instruction to the application according to the slot value description, such that the application implements the preset function according to the slot value in the voice control instruction.

4. The voice control method of any one of claims 1 to 3, wherein acquiring the function information of the application comprises:
acquiring meta-data from a configuration file of the application through a preset function information acquisition interface; and
parsing the meta-data to obtain the function information of the application.

5. The voice control method of any one of claims 1 to 3, wherein acquiring the function information of the application comprises:
uploading the application description typical statement of the application to a server, such that the server extends the application description typical statement; and
calling the application according to the calling mode to implement the preset function in response to an acquired voice control instruction matching the application description typical statement comprises:
acquiring a calling mode corresponding to the extended application description typical statement in response to the acquired voice control instruction matching the extended application description typical statement, and calling the application according to the calling mode to implement the preset function.

6. A voice control method, applied to a server in communication connection with a terminal device, the method comprising:
acquiring function information of an application on the terminal device, wherein the function information comprises a calling mode and an application description typical statement corresponding to a preset function of the application, and the application description typical statement is a sentence describing the preset function;
acquiring a voice control instruction sent by the terminal device; and
sending an application running instruction according to the calling mode to the terminal device in response to the voice control instruction matching the application description typical statement, wherein the application running instruction is used for instructing the terminal device to call the application to implement the preset function.

7. The voice control method of claim 6, further comprising:
determining text information corresponding to the voice control instruction; and
determining that the voice control instruction matches the application description typical statement, in response to the text information comprising a keyword corresponding to the application description typical statement.

8. The voice control method of claim 6, further comprising:
extending the application description typical statement in the function information acquired from the terminal device, wherein the extending comprises synonym extending.

9. The voice control method of any one of claims 6 to 8, wherein the function information further comprises a slot value description for indicating slot value transfer; that the voice control instruction matches the application description typical statement comprises: the voice control instruction comprises a keyword corresponding to the application description typical statement and comprises a slot value corresponding to the slot value description; and
sending the application running instruction comprising the calling mode to the terminal device comprises:
sending the application running instruction to the terminal device according to the calling mode and the slot value description, such that the terminal device calls the application and implements the preset function according to the slot value in the voice control instruction.

10. A terminal device, comprising a processor, a memory, a computer program stored in the memory and executable by the processor, and a communication bus configured for implementing connection and communication between the processor and the memory, wherein the computer program, when executed by the processor, causes the processor to carry out the voice control method of any of claims 1 to 5.

11. A server, comprising a processor, a memory, a computer program stored in the memory and executable by the processor, and a communication bus configured for implementing connection and communication between the processor and the memory, wherein the computer program, when executed by the processor, causes the processor to carry out the voice control method of any of claims 6 to 9.

12. A storage medium for computer-readable storage, the storage medium storing one or more programs which, when executed by one or more processors, cause the one or more processors to carry out the voice control method applied to a terminal device of any of claims 1 to 5 and/or
the voice control method applied to a server of any of claims 6 to 9.
